# EUROPEAN PATENT APPLICATION

(11) **EP 4 749 577 A1**
(43) Date of publication of application: **27.05.2026**
(21) Application number: 24853171.7
(22) Date of filing: 12.03.2024
(51) Int. Cl.: G06T 15/04

(54) **MESH MODEL GENERATION METHOD AND APPARATUS, AND DEVICE**

(30) Priority: 16.08.2023 CN 202311034137; 30.11.2023 CN 202311654049
(71) Applicant: Huawei Cloud Computing Technologies Co., Ltd., Gui'an New District, Guizhou 550025 (CN)
(72) Inventor: REN, Hang, Guiyang, Guizhou 550025 (CN); ZHOU, Shunbo, Guiyang, Guizhou 550025 (CN); XU, Ziwei, Guiyang, Guizhou 550025 (CN); WANG, Feng, Guiyang, Guizhou 550025 (CN)
(74) Representative: MERH-IP Matias Erny Reichl Hoffmann Patentanwälte PartG mbB
(86) International application number: PCT/CN2024/081222
(87) International publication number: WO 2025/035755

(57) **Abstract**

This application provides a mesh model generation method and apparatus, and a device, and relates to the field of artificial intelligence technologies. The method includes: obtaining visual data that is of an object and that is uploaded by a user, where the visual data includes at least one of an image, a point cloud, and a voxel model; performing geometric feature extraction on the visual data of the object, to obtain a first geometric feature of the object; obtaining, from a prior knowledge base, prior knowledge corresponding to an object category to which the object belongs, where the prior knowledge is used to guide establishment of a geometric generation network; establishing a first geometric generation network based on the first geometric feature and the prior knowledge corresponding to the object category to which the object belongs; and generating a first mesh model of the object based on the first geometric generation network. A mesh model can be automatically established without manual intervention.

## Description

This application claims priorities to Chinese Patent Application No. 202311034137.4, filed on August 16, 2023 and entitled "THREE-DIMENSIONAL DIGITAL ASSET CONVERSION METHOD, APPARATUS, DEVICE, AND STORAGE MEDIUM", and to Chinese Patent Application No. 202311654049.4, filed on November 30, 2023 and entitled "MESH MODEL GENERATION METHOD AND APPARATUS, AND DEVICE", both of which are incorporated herein by reference in their entireties.

### TECHNICAL FIELD

This application relates to the field of artificial intelligence technologies, and in particular, to a mesh model generation method and apparatus, and a device.

### BACKGROUND

Three-dimensional (3-dimensional, 3D) models are widely used in a plurality of fields such as industrial simulation and large model training. The 3D models generally include a mesh model, a point cloud model, a voxel model, and the like. The mesh model is closest to an actual object in the several 3D models in terms of both geometric precision and a rendering effect.

Currently, a modeler usually uses computer software to construct a mesh model of an object. However, manual modeling efficiency is low. If there are a large quantity of objects in a complex scenario, it may take several months to complete modeling.

### SUMMARY

This application provides a mesh model generation method and apparatus, and a device, to generate a mesh model more efficiently. Corresponding technical solutions are as follows.

According to a first aspect, a mesh model generation method is provided. The method includes:
obtaining visual data that is of an object and that is uploaded by a user, where the visual data includes at least one of an image, a point cloud, and a voxel model; then, performing geometric feature extraction on the visual data of the object, to obtain a first geometric feature of the object; obtaining, from a prior knowledge base, prior knowledge corresponding to an object category to which the object belongs, where the prior knowledge is used to guide establishment of a geometric generation network; further, establishing a first geometric generation network based on the first geometric feature and the prior knowledge corresponding to the object category to which the object belongs; and finally, generating a first mesh model of the object based on the first geometric generation network.

In the technical solution provided in this application, the geometric generation network is automatically constructed with reference to prior knowledge and a geometric feature of the object, so that a mesh model of the object can be automatically generated by using the geometric generation network. An entire process does not need manual intervention, and mesh model generation efficiency is higher.

In a possible implementation, the prior knowledge corresponding to the object category to which the object belongs includes a first geometric latent space network and a first geometric generation network hyperparameter. Correspondingly, the establishing the first geometric generation network based on the first geometric feature and the prior knowledge corresponding to the object category to which the object belongs includes:
inputting the first geometric feature into the first geometric latent space network, to obtain a first geometric generation network parameter; establishing an initial geometric generation network based on the first geometric generation network parameter and the first geometric generation network hyperparameter; and then, performing supervised training on the initial geometric generation network based on the first geometric feature, to obtain the first geometric generation network.

In the technical solution provided in this application, supervised training is performed on the geometric generation network by using a geometric feature of the object, so that a trained geometric generation network can be used to deterministically generate a mesh model of the object, and the generated mesh model has higher precision.

In a possible implementation, a geometric latent space network in the prior knowledge base may be further optimized. Correspondingly, processing may be as follows:
training the first geometric latent space network based on the first geometric feature and the geometric generation network parameter of the first geometric generation network, to obtain a trained geometric latent space network; and then, replacing the first geometric latent space network stored in the prior knowledge base with the trained geometric latent space network.

In the technical solution provided in this application, the geometric latent space network is optimized, so that availability of a geometric generation network parameter output by the geometric latent space network can be higher, to reduce a quantity of training times of the geometric generation network, and improve mesh model generation efficiency.

In a possible implementation, the user may upload visual data of a scenario. Correspondingly, after visual data that is of a first scenario and that is uploaded by the user is obtained, object segmentation may be performed on the visual data of the first scenario, to obtain visual data of each of a plurality of objects. Therefore, the technical solution provided in this application may be used to generate mesh models of all or a part of the plurality of objects.

In a possible implementation, when the user uploads vision of the scenario, a mesh model of the scenario may be further generated. Correspondingly, processing may be as follows:
performing spatial feature extraction on the plurality of objects in the visual data of the first scenario, to obtain spatial features respectively corresponding to the plurality of objects, where the spatial features are used to represent poses of the corresponding objects in the first scenario; and then, placing, based on the spatial features respectively corresponding to the plurality of objects, mesh models respectively corresponding to the plurality of objects, to obtain a mesh model of the first scenario.

In a possible implementation, considering that a position relationship that is between the objects and that is calculated based on the spatial features of the object may be inaccurate, placement positions of the mesh models of the objects may be adjusted in the mesh model of the scenario with reference to the prior knowledge. Correspondingly, processing may be as follows:
for every two of the plurality of objects, obtaining, through calculation based on spatial features respectively corresponding to the every two objects, that a position relationship between every two objects is confidence of each of a plurality of preset position relationships; determining a first object category and a second object category to which the every two objects respectively belong; obtaining, from the prior knowledge base, that a position relationship between an object in the first object category and an object in the second object category in the first scenario is reference confidence of each preset position relationship; determining the position relationship between every two objects based on the confidence and the reference confidence; and performing, based on the position relationship between the two objects, position adjustment on mesh models that are in the mesh model of the first scenario and that respectively correspond to the two objects.

In the technical solution provided in this application, the prior knowledge base stores a fact that in different scenarios, a position relationship between objects in each object category is reference confidence of each preset position relationship. The reference confidence may be obtained through calculation based on an actual position relationship between the objects in each object category in different scenarios, and may reflect the actual position relationship between the objects in each object category to some extent. On this basis, position adjustment is performed on the mesh model of each object in the mesh model of the first scenario on a basis that the position relationship between the object in the first object category and the object in the second object category in the first scenario is the reference confidence of each preset position relationship, so that a position relationship between the mesh models of the objects can be more realistic.

In a possible implementation, texture rendering may be further performed on the mesh model, so that the mesh model becomes a textured mesh model, and is closer to an actual object. Correspondingly, processing may be as follows:
obtaining a first texture map of the object; and rendering the first texture map onto the first mesh model, to obtain a first textured mesh model of the object, where the first texture map of the object herein may be obtained on any occasion before, after, or when the first mesh model is generated, which is not limited in this application.

In a possible implementation, when the visual data uploaded by the user is at least one of a non-colored point cloud and a non-colored voxel model, a texture feature cannot be directly obtained from the visual data. In this case, the user may specify a texture. Correspondingly, processing may be as follows:
receiving a texture selection request sent by the user, where the texture selection request carries texture style indication information, color type indication information, and color brightness indication information; and obtaining a first texture generation network to which the texture type indication information, the color type indication information, and the color brightness indication information jointly correspond; and generating the first texture map of the object based on the first texture generation network.

In a possible implementation, when the visual data uploaded by the user is at least one of a colored point cloud, a colored voxel model, and an image, a texture feature may be directly extracted from the vision, to generate a texture map. Correspondingly, processing may be as follows:
performing texture feature extraction on the visual data of the object, to obtain a first texture feature of the object; establishing a second texture generation network based on the first texture feature and the prior knowledge of the object; and generating the first texture map of the object based on the second texture generation network.

In a possible implementation, the prior knowledge further includes a first texture latent space network and a first texture generation network hyperparameter. Correspondingly, processing of establishing a texture generation network based on the prior knowledge may be as follows:
inputting the first texture feature into the first texture latent space network, to obtain a first texture generation network parameter; establishing an initial texture generation network based on the first texture generation network parameter and the first texture generation network hyperparameter; training the initial texture generation network based on the first texture feature, to obtain the second texture generation network; and generating the first texture map of the object based on the second texture generation network.

In the technical solution provided in this application, supervised training is performed on the texture generation network by using the texture feature of the object, so that the trained texture generation network can be used to deterministically generate the texture map of the object, and the generated texture map is closer to a texture of an actual object.

In a possible implementation, a texture latent space network in the prior knowledge base may be further optimized. Correspondingly, processing may be as follows:
training the first texture latent space network based on the first texture feature and a texture generation network parameter of the trained texture generation network, to obtain a trained texture latent space network; and replacing the first texture latent space network stored in the prior knowledge base with the trained texture latent space network.

In the technical solution provided in this application, the texture latent space network is optimized, so that availability of a texture generation network parameter output by the texture latent space network can be higher, to reduce a quantity of training times of the texture generation network, and improve texture map generation efficiency.

In a possible implementation, the user may specify a 3D model of a specific type and a specific format to be generated. Correspondingly, processing may be as follows:
receiving a 3D model conversion request, where the 3D model conversion request carries indication information of a target model type and indication information of a target model format; and converting the mesh model of the object into a 3D model of the target model type and the target model format.

In a possible implementation, to facilitate archiving management, the object may be further labeled. Correspondingly, processing may be as follows:
determining, based on an object category label stored in the prior knowledge base, an object category label corresponding to the object.

In a possible implementation, the technical solution provided in this application may further implement self-growth of the mesh model, and processing may be as follows:
receiving a first 3D digital asset self-growth request sent by the user, where the first 3D digital asset self-growth request carries indication information of a first growth start point object, indication information of a first growth end point object, and a target quantity, and the first growth start point object and the first growth end point object are different objects in a third object category; obtaining, from the prior knowledge base, a geometric feature of the first growth start point object, a geometric feature of the first growth end point object, and prior knowledge corresponding to the third object type; generating a target quantity of intermediate geometric features by using the geometric feature of the first growth start point object as a start point and the geometric feature of the first growth end point object as an end point; and for each of the target quantity of intermediate geometric features, generating a second geometric generation network based on the intermediate geometric feature and the prior knowledge corresponding to the third object type, and generating a second mesh model based on the second geometric generation network.

In the technical solution provided in this application, the user may specify a growth start point object and a growth end point object in self-growth of the mesh model, and a target quantity of self-growing mesh models. Further, the foregoing solution may be used to generate the target quantity of mesh models of objects whose features are between the growth start point object and the growth end point object. Through self-growth of the mesh model, a large quantity of mesh models in a specific object category can be quickly generated, so that these mesh models can be provided for various services such as large model training and simulation for use.

In a possible implementation, the mesh model obtained through self-growth may be stored in a digital asset library. Correspondingly, processing may be as follows:
storing the target quantity of obtained second mesh models and the target quantity of obtained second geometric generation networks in a cloud digital asset library.

In the technical solution provided in this application, only the target quantity of second geometric generation networks may be stored, and the second mesh model is not stored. When necessary, the second mesh model may be temporarily generated by using the second geometric generation network. In this way, storage space of the digital asset library can be saved.

In a possible implementation, when implementing self-growth of the mesh model, the user may alternatively specify a target step instead of the target quantity. Correspondingly, processing of self-growth of the mesh model may be as follows:
receiving a second 3D digital asset self-growth request sent by the user, where the second 3D digital asset self-growth request carries indication information of a second growth start point object, indication information of a second growth end point object, and a target step, and the second growth start point object and the second growth end point object are different objects in a fourth object category; obtaining, from the prior knowledge base, a geometric feature of the second growth start point object, a geometric feature of the second growth end point object, and prior knowledge corresponding to the fourth object type; generating at least one intermediate geometric feature by using the geometric feature of the second growth start point object as a start point and the geometric feature of the second growth end point object as an end point; and for each of the at least one intermediate geometric feature, generating a third geometric generation network based on the intermediate geometric feature and the prior knowledge corresponding to the fourth object type, and generating a third mesh model based on the third geometric generation network.

In the technical solution provided in this application, the user may specify a growth start point object and a growth end point object in self-growth of the mesh model, and the target step of self-growth. Further, the foregoing solution may be used to generate at least one mesh model of an object whose feature is between the growth start point object and the growth end point object. Through self-growth of the mesh model, mesh models in a specific object category can be quickly generated, so that these mesh models can be provided for various services such as large model training and simulation for use.

In a possible implementation, the technical solution provided in this application may further implement self-growth of a scenario-level mesh model, and processing may be as follows:
receiving a third 3D digital asset self-growth request sent by the user, where the third 3D digital asset self-growth request carries indication information of a second scenario and indication information of a plurality of objects in the second scenario; obtaining, from the digital asset library, mesh models of the plurality of objects in the second scenario; obtaining, from the prior knowledge base, that a position relationship between every two objects in the second scenario is reference confidence of each of a plurality of preset position relationships; determining the position relationship between every two objects in the second scenario on a basis that the position relationship between every two objects in the second scenario is the reference confidence of each of the plurality of preset position relationships; and placing the mesh models of the plurality of objects in the second scenario based on the position relationship between every two objects in the second scenario, to obtain a mesh model of the second scenario.

In the technical solution provided in this application, the user may specify a needed scenario and objects included in the scenario, so that a mesh model of the scenario including these objects can be generated. Generation efficiency is high, and the user does not need to provide visual data of the scenario.

In a possible implementation, the mesh model obtained through self-growth may be stored in the digital asset library. Correspondingly, processing may be as follows:
storing the mesh model of the second scenario in the digital asset library.

In the technical solution provided in this application, self-growth of the mesh model can be implemented, to obtain more mesh models, so that a large quantity of needed mesh models can be provided for various services such as large model training and simulation.

According to a second aspect, a mesh model generation apparatus is provided. The apparatus includes:
a data preprocessing module, configured to obtain visual data that is of an object and that is uploaded by a user, where the visual data includes at least one of an image, a point cloud, and a voxel model;
a feature extraction module, configured to perform geometric feature extraction on the visual data of the object, to obtain a first geometric feature of the object; and
an artificial intelligence-based digital asset generation AIGX module, configured to: obtain, from a prior knowledge base, prior knowledge corresponding to an object category to which the object belongs, where the prior knowledge is used to guide establishment of a geometric generation network; establish a first geometric generation network based on the first geometric feature and the prior knowledge corresponding to the object category to which the object belongs; and generate a first mesh model of the object based on the first geometric generation network.

In a possible implementation, the prior knowledge corresponding to the object category to which the object belongs includes a first geometric latent space network and a first geometric generation network hyperparameter, and the AIGX module is configured to:
input the first geometric feature into the first geometric latent space network, to obtain a first geometric generation network parameter;
establish an initial geometric generation network based on the first geometric generation network parameter and the first geometric generation network hyperparameter; and
train the initial geometric generation network based on the first geometric feature, to obtain the first geometric generation network.

In a possible implementation, the AIGX module is configured to:
train the first geometric latent space network based on the first geometric feature and the geometric generation network parameter of the first geometric generation network, to obtain a trained geometric latent space network; and
replace the first geometric latent space network stored in the prior knowledge base with the trained geometric latent space network.

In a possible implementation, the data preprocessing module is configured to:
obtain visual data that is of a first scenario and that is uploaded by the user, where the first scenario includes a plurality of objects; and
perform object segmentation on the visual data of the first scenario, to obtain visual data of each of the plurality of objects.

In a possible implementation, the apparatus further includes a positioning module, configured to:
perform spatial feature extraction on the plurality of objects in the visual data of the first scenario, to obtain spatial features respectively corresponding to the plurality of objects, where the spatial features are used to represent poses of the corresponding objects in the first scenario; and
place, based on the spatial features respectively corresponding to the plurality of objects, mesh models respectively corresponding to the plurality of objects, to obtain a mesh model of the first scenario.

In a possible implementation, the apparatus further includes a scenario optimization module, configured to:
for every two of the plurality of objects, obtain, through calculation based on spatial features respectively corresponding to the two objects, that a position relationship between the two objects is confidence of each of a plurality of preset position relationships;
determine a first object category and a second object category to which the two objects respectively belong;
obtain, from the prior knowledge base, that a position relationship between an object in the first object category and an object in the second object category in the first scenario is reference confidence of each preset position relationship;
determine the position relationship between the two objects based on the confidence and the reference confidence; and
perform, based on the position relationship between the two objects, position adjustment on mesh models that are in the mesh model of the first scenario and that respectively correspond to the two objects.

In a possible implementation, the AIGX module is further configured to:
obtain a first texture map of the object; and
render the first texture map onto the first mesh model, to obtain a first textured mesh model of the object.

In a possible implementation, the visual data is at least one of a non-colored point cloud and a non-colored voxel model, and the AIGX module is configured to:
receive a texture selection request sent by the user, where the texture selection request carries texture style indication information, color type indication information, and color brightness indication information;
obtain a first texture generation network to which the texture type indication information, the color type indication information, and the color brightness indication information jointly correspond; and
generate the first texture map of the object based on the first texture generation network.

In a possible implementation, the prior knowledge is further used to guide establishment of a texture generation network, and the feature extraction module is further configured to:
perform texture feature extraction on the visual data of the object, to obtain a first texture feature of the object; and
establish a second texture generation network based on the first texture feature and the prior knowledge of the object.

The AIGX module is configured to:
generate the first texture map of the object based on the second texture generation network.

In a possible implementation, the prior knowledge includes a first texture latent space network and a first texture generation network hyperparameter, and the AIGX module is configured to:
input the first texture feature into the first texture latent space network, to obtain a first texture generation network parameter;
establish an initial texture generation network based on the first texture generation network parameter and the first texture generation network hyperparameter;
train the initial texture generation network based on the first texture feature, to obtain the second texture generation network; and
generate the first texture map of the object based on the second texture generation network.

In a possible implementation, the AIGX module is further configured to:
train the first texture latent space network based on the first texture feature and a texture generation network parameter of the trained texture generation network, to obtain a trained texture latent space network; and
replace the first texture latent space network stored in the prior knowledge base with the trained texture latent space network.

In a possible implementation, the apparatus further includes a 3D digital asset conversion module, configured to:
receive a 3D model conversion request, where the 3D model conversion request carries indication information of a target model type and indication information of a target model format; and convert the mesh model of the object into a 3D model of the target model type and the target model format.

In a possible implementation, the data preprocessing module is further configured to:
determine, based on an object category label stored in the prior knowledge base, an object category label corresponding to the object.

In a possible implementation, the AIGX module is further configured to:
store the first geometric feature of the object in the prior knowledge base;
receive a first 3D digital asset self-growth request sent by the user, where the first 3D digital asset self-growth request carries indication information of a first growth start point object, indication information of a first growth end point object, and a target quantity, and the first growth start point object and the first growth end point object are different objects in a third object category;
obtain, from the prior knowledge base, a geometric feature of the first growth start point object, a geometric feature of the first growth end point object, and prior knowledge corresponding to the third object type;
generate a target quantity of intermediate geometric features by using the geometric feature of the first growth start point object as a start point and the geometric feature of the first growth end point object as an end point; and
for each of the target quantity of intermediate geometric features, generate a second geometric generation network based on the intermediate geometric feature and the prior knowledge corresponding to the third object type, and generate a second mesh model based on the second geometric generation network.

In a possible implementation, the AIGX module is further configured to:
store the target quantity of obtained second mesh models and the target quantity of obtained second geometric generation networks in a cloud digital asset library.

In a possible implementation, the AIGX module is further configured to:
store the first geometric feature of the object in the prior knowledge base;
receive a second 3D digital asset self-growth request sent by the user, where the second 3D digital asset self-growth request carries indication information of a second growth start point object, indication information of a second growth end point object, and a target step, and the second growth start point object and the second growth end point object are different objects in a fourth object category;
obtain, from the prior knowledge base, a geometric feature of the second growth start point object, a geometric feature of the second growth end point object, and prior knowledge corresponding to the fourth object type;
generate at least one intermediate geometric feature by using the geometric feature of the second growth start point object as a start point and the geometric feature of the second growth end point object as an end point; and
for each of the at least one intermediate geometric feature, generate a third geometric generation network based on the intermediate geometric feature and the prior knowledge corresponding to the fourth object type, and generate a third mesh model based on the third geometric generation network.

In a possible implementation, the AIGX module is further configured to:
receive a third 3D digital asset self-growth request sent by the user, where the third 3D digital asset self-growth request carries indication information of a second scenario and indication information of a plurality of objects in the second scenario;
obtain, from a digital asset library, mesh models of the plurality of objects in the second scenario;
obtain, from the prior knowledge base, that a position relationship between every two objects in the second scenario is reference confidence of each of a plurality of preset position relationships;
determine the position relationship between every two objects in the second scenario on a basis that the position relationship between every two objects in the second scenario is the reference confidence of each of the plurality of preset position relationships; and
place the mesh models of the plurality of objects in the second scenario based on the position relationship between every two objects in the second scenario, to obtain a mesh model of the second scenario.

In a possible implementation, the AIGX module is further configured to:
store the mesh model of the second scenario in the digital asset library.

According to a third aspect, a computing device cluster is provided. The computing device cluster includes at least one computing device, and each computing device includes a processor and a memory.

The processor of the at least one computing device is configured to execute instructions stored in the memory of the device, to cause the computing device cluster to perform the mesh model generation method according to the first aspect.

According to a fourth aspect, a computer program product including instructions is provided. When the instructions are run by a computing device cluster, the computing device cluster is caused to perform the mesh model generation method according to the first aspect.

According to a fifth aspect, a computer-readable storage medium is provided, including computer program instructions. When the computer program instructions are executed by a computing device, the computing device performs the mesh model generation method according to the first aspect.

### BRIEF DESCRIPTION OF DRAWINGS

FIG. 1 is a diagram of an implementation scenario according to an embodiment of this application;
FIG. 2 is a schematic flowchart of a mesh model generation method according to an embodiment of this application;
FIG. 3 is a schematic flowchart of a mesh model generation method according to an embodiment of this application;
FIG. 4 is a schematic flowchart of a mesh model generation method according to an embodiment of this application;
FIG. 5 is a schematic flowchart of a mesh model generation method according to an embodiment of this application;
FIG. 6 is a schematic flowchart of a mesh model generation method according to an embodiment of this application;
FIG. 7 is a diagram of a structure of a mesh model generation apparatus according to an embodiment of this application;
FIG. 8 is a diagram of a structure of a computing device according to an embodiment of this application;
FIG. 9 is a diagram of a computing device cluster according to an embodiment of this application; and
FIG. 10 is a diagram of a computing device cluster according to an embodiment of this application.

### DESCRIPTION OF EMBODIMENTS

The following first explains and describes some terms in embodiments of this application.

### 1. Mesh model (mesh model)

The mesh model is a type of 3D digital asset, and is a model that uses a series of polygons (usually triangles) of similar sizes and shapes to approximately represent a three-dimensional object.

### 2. Voxel model (voxel model)

The voxel model is a type of 3D digital asset, and is a model that uses an ordered combination of a large quantity of regular voxels (such as cubes) to represent a three-dimensional object.

### 3. Point cloud (point cloud)

The point cloud is a type of 3D digital asset, is a data set of points in space, may represent a three-dimensional shape or object, and is usually obtained by a three-dimensional scanner. The three-dimensional scanner includes but is not limited to a three-dimensional laser radar.

### 4. 3D digital asset type conversion

Conversion of a mesh model into a voxel model: The mesh model may be converted into the voxel model by using a voxelization method. Common voxelization methods include multi-view orthographic projection view rendering, object slicing, octree space partitioning, and the like.

Conversion of the mesh model into a point cloud: The corresponding point cloud may be obtained by sampling vertices of a face or obtaining more points from the face of the mesh model.

Conversion of the voxel model into the mesh model: The voxel model may convert a voxel into a vertex, an edge, and a face by using algorithms such as a marching cube (Marching Cube) algorithm or a dual contouring (Dual Contouring) algorithm, to obtain a representation of the mesh model.

Conversion of the voxel model into the point cloud: A point cloud model can be sampled by calculating a center of gravity of a point in each voxel in the voxel model or placing a representative point on a surface of the voxel.

Conversion of the point cloud into the voxel model: Based on a given voxel size, space is divided into regular cubes by using an octree algorithm or another algorithm. For each cube, if the cube does not include a point in the point cloud, the cube is discarded; or if the cube includes a point in the point cloud, the point is retained. In this way, voxelization of the point cloud can be implemented, and the voxel model can be obtained.

Conversion of the point cloud into the mesh model: A ball pivoting algorithm, a Poisson reconstruction algorithm, and a Delaunay (Delaunay) triangle projection algorithm may be used to fit a surface of the point cloud, to form a plurality of triangular meshes, so as to generate the mesh model.

### 5. Artificial intelligence generated X (Artificial Intelligence Generated X, AIGX)

AI technologies such as deep learning and reinforcement learning are used to generate text, pictures, audio, videos, 3D models, and the like. In disclosed embodiments, the 3D model is generated by using the AIGX.

### 6. Geometric generation network

The geometric generation network is a type of neural network. In this application, the geometric generation network is used to generate a mesh model. The neural network may also be referred to as a generative network, a 3D model generation network, a 3D geometric generation network, a mesh model generation network, or the like. A name of the neural network is not limited in this application.

### 7. Texture generation network

The texture generation network is a type of neural network. In this application, the texture generation network is used to generate a texture map. The neural network may also be referred to as a generative network, a 3D model texture generation network, a mesh model texture generation network, or the like. A name of the neural network is not limited in this application.

Embodiments of this application provide a mesh model generation method. The method may be implemented by a computing device, a computing device cluster, or the like. The computing device and the computing device cluster may be cloud platforms, or may be local user equipment. The method may be applied to various scenarios in which a 3D model needs to be used. For example, in a simulation experiment in a manufacturing industry, a 3D model of a factory needs to be established, so that a user can collect visual data of the factory, such as an image and a point cloud, and the computing device generates the 3D model of the factory by using the method provided in this application.

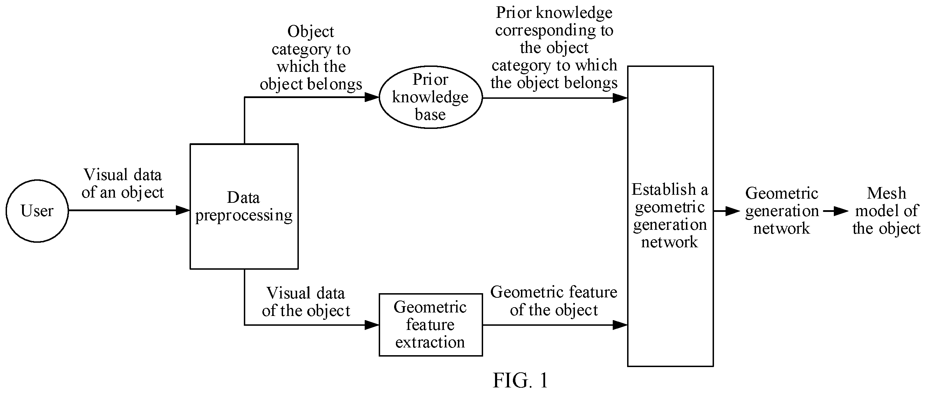

FIG. 1 is a diagram of an implementation scenario according to an embodiment of this application. As shown in FIG. 1, a user may upload, to a computing device based on a requirement of the user, visual data of an object for which a 3D model needs to be established. The visual data may be one or more of an image, a point cloud, and a voxel model. The computing device performs data preprocessing on the visual data, to determine an object category to which the object belongs. Then, geometric feature extraction is performed on the visual data, to obtain a geometric feature of the object. Further, prior knowledge corresponding to the object category to which the object belongs is obtained from a prior knowledge base, where the prior knowledge is used to guide establishment of a geometric generation network. Then, the geometric generation network is established based on the geometric feature of the object and the prior knowledge corresponding to the object category to which the object belongs, and a mesh model of the object is generated by using the geometric generation network. In addition, to cause the mesh model of the object to have a texture, in this embodiment of this application, a texture map of the object may be further obtained, and the texture map of the object is rendered onto the mesh model of the object, to obtain a textured mesh model of the object. On a basis of generating the mesh model of the object, the mesh model of the object may be further converted into a point cloud, a voxel model, or the like based on a type requirement of the user for the 3D model. According to the method provided in this embodiment of this application, the geometric generation network may be automatically constructed with reference to the prior knowledge and the geometric feature of the object, so that the mesh model of the object can be automatically generated by using the geometric generation network. An entire process does not need manual intervention, and 3D model generation efficiency is higher.

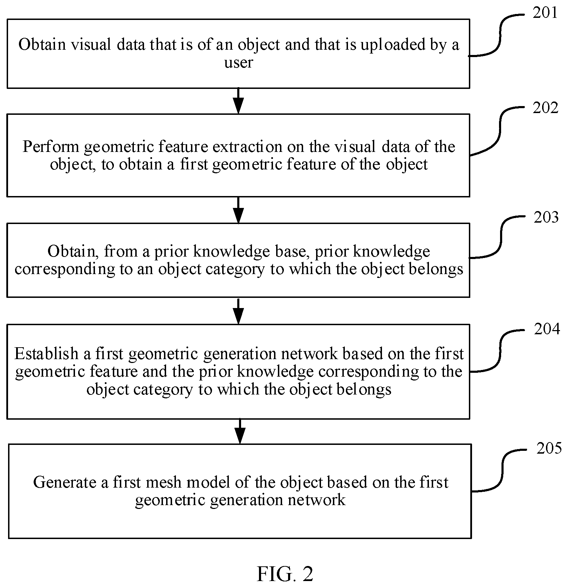

FIG. 2 is a flowchart of a mesh model generation method according to an embodiment of this application. The method may be implemented by a computing device. As shown in the figure, a procedure of the method may include the following steps.

Step 201: Obtain visual data that is of an object and that is uploaded by a user.

The visual data includes at least one of an image, a point cloud, and a voxel model, and the image may include a picture and a video.

During implementation, the user may collect the visual data of the object based on an actual requirement, and upload the collected visual data of the object to the computing device. For example, the user may photograph an image of the object by using a mobile phone, a tablet computer, a camera, or the like, and use the image as the visual data of the object; may collect a point cloud of the object by using a data collection device, and use the point cloud as the visual data of the object; may establish a voxel model of the object, and use the voxel model as the visual data of the object; or may obtain at least one of an image, a point cloud, and a voxel model of the object through an internet, and use the at least one of the image, the point cloud, and the voxel model as the visual data of the object.

The visual data of the object mentioned herein may be visual data of a single object, or may be visual data of a scenario including a plurality of objects. For example, if the user wants a 3D model of a car, the user may obtain one or more of a picture, a video, a point cloud, and a voxel model of the car, and upload the one or more of the picture, the video, the point cloud, and the voxel model to the computing device. For another example, if the user wants a 3D model of a car manufacturing factory, and the factory includes a plurality of objects, such as various machines and cars on a production line, the user may obtain one or more of a picture, a video, a point cloud, and a voxel model of the factory, and upload the one or more of the picture, the video, the point cloud, and the voxel model to the computing device.

In a possible implementation, after the visual data that is of the object and that is uploaded by the user is received, data filtering may be first performed on the visual data, to remove redundant data, sensitive data, abnormal data, and the like.

The redundant data may be repeated data. For example, if the visual data uploaded by the user includes two same pictures, which are redundant data, one of the pictures is removed as the redundant data through data filtering. The sensitive data may be data including sensitive information. For example, if the visual data uploaded by the user includes a picture including a clearly visible human face, the clearly visible human face relates to personal privacy, and the picture is sensitive data, the picture including the clearly visible human face is removed through data filtering. The abnormal data may be data with poor quality. For example, if the visual data uploaded by the user includes an overexposed or underexposed picture, which is abnormal data, the overexposed or underexposed picture is removed through data filtering.

In a possible implementation, for the visual data that is of the object and that is uploaded by the user, the computing device may obtain an object instance label and an object category label of the object. For an object that is a sedan of a brand A, an object instance label of the object may be used to describe that the object is a sedan, or describe that the object is a sedan of the brand A, and an object category label of the object is used to describe that the object is a car.

When the visual data that is of the object and that is uploaded by the user is the visual data of the single object, if the user further uploads an object instance label when uploading the visual data of the object, the computing device does not need to label the visual data of the object, and directly uses the object instance label uploaded by the user. If the user does not upload an object instance label when uploading the visual data of the object, the computing device may label the visual data of the object, to obtain the object instance label. After the object instance label is obtained, an object category label may be further obtained.

When the visual data that is of the object and that is uploaded by the user is the visual data of the scenario including a plurality of objects, if the user further uploads an object instance label of each object in the scenario when uploading the visual data of the scenario, the computing device does not need to perform segmentation and labeling on the visual data of the scenario, and directly uses the object instance label uploaded by the user. If the user does not upload an object instance label when uploading the visual data of the scenario, segmentation and labeling may be performed on the visual data of the scenario, to obtain an object instance label of each object in the scenario. Segmentation and labeling may be implemented in a plurality of manners. For example, the visual data of the scenario is input into a segmentation and labeling model, and the segmentation and labeling model performs segmentation and labeling processing on the visual data, and outputs the object instance label of each object in the scenario. The segmentation and labeling model mentioned herein may be a neural network model. After the object instance label of each object in the scenario is obtained, an object category label of each object may be further obtained.

There are a plurality of methods for obtaining the object category label of the object. The following lists several methods as examples for description.

Method 1: A prior knowledge base may be deployed on the computing device, and the prior knowledge base stores a plurality of object category labels. The object instance label of the object is converted into a numerical vector through natural language processing, and then, the obtained numerical vector is input into a classifier. The classifier outputs a probability that the object belongs to an object category indicated by each object category label in the prior knowledge base, and an object category label corresponding to a maximum probability is determined as the object category label corresponding to the object.

Method 2: A prior knowledge base may be deployed on the computing device, and the prior knowledge base stores a plurality of object category labels. The object instance label of the object and each object category label stored in the prior knowledge base are input into a large language model, and the large language model outputs an object category label corresponding to an object category to which the object belongs, that is, the object category label corresponding to the object. The object category label output by the large language model is one of the object category labels stored in the prior knowledge base.

When the object category label of the object is obtained, the computing device may correspondingly store the object category label of the object and the visual data of the object in a digital asset library.

Step 202: Perform geometric feature extraction on the visual data of the object, to obtain a first geometric feature of the object.

A geometric feature may be represented in a form of a vector, and the geometric feature is used to represent a contour feature, an area, a circumference, a direction, and the like of the object.

During implementation, when the user uploads the visual data of the single object, the computing device performs geometric feature extraction on the visual data of the object, to obtain a first geometric feature of the object. When the user uploads the visual data of the scenario, the computing device may perform geometric feature extraction on visual data that is of each object in the scenario and that is obtained by segmenting the visual data of the scenario, to obtain a first geometric feature of each object.

There may be a plurality of geometric feature extraction methods. The following lists several methods as examples for description.

The contour feature of the object is extracted by using a boundary feature method or a Fourier shape description method, and features such as the area, the circumference, and the direction of the object are extracted by using a geometric parameter method or a shape invariant moment method.

Step 203: Obtain, from the prior knowledge base, prior knowledge corresponding to the object category to which the object belongs.

The prior knowledge is used to guide establishment of a geometric generation network, and the prior knowledge includes a first geometric latent space network and a first geometric generation network hyperparameter that correspond to the object category to which the object belongs.

During implementation, the prior knowledge base may be deployed on the computing device. The prior knowledge base stores a geometric latent space network and a geometric generation network hyperparameter that correspond to the object category. The geometric latent space network is used to generate a geometric generation network parameter. The geometric generation network parameter includes a weight, an offset, and the like in the geometric generation network. The geometric generation network hyperparameter includes a learning rate, a quantity of iterations, an optimization algorithm, a quantity of sensing layers, a size of a convolution kernel, and the like of the geometric generation network. The geometric generation network hyperparameter does not change in a geometric generation network training process.

When the user uploads the visual data of the single object, the computing device obtains, from the prior knowledge base, a first geometric latent space network and a first geometric generation network hyperparameter that correspond to an object category to which the object belongs.

When the user uploads the visual data of the scenario, for each object included in the scenario, the computing device obtains, from the prior knowledge base, a first geometric latent space network and a first geometric generation network hyperparameter that correspond to an object category to which the object belongs.

Step 204: Establish a first geometric generation network based on the first geometric feature and the prior knowledge corresponding to the object category to which the object belongs.

During implementation, when the user uploads the visual data of the single object, the computing device establishes a first geometric generation network used to generate a mesh model of the object.

When the user uploads the visual data of the scenario, for each object included in the scenario, the computing device establishes a first geometric generation network used to generate a mesh model of the object.

The following describes establishment of the first geometric generation network.

The user inputs the first geometric feature of the object into the first geometric latent space network, and the first geometric latent space network outputs a first geometric generation network parameter. An initial geometric generation network is established based on the first geometric generation network parameter and the first geometric generation network hyperparameter. A hyperparameter of the initial geometric generation network is the first geometric generation network hyperparameter, and a parameter of the initial geometric generation network is the first geometric generation network parameter. Then, the initial geometric generation network is trained based on the first geometric feature, to obtain the first geometric generation network. In a training process, the hyperparameter of the initial geometric network remains unchanged, and the parameter of the initial geometric generation network changes.

Step 205: Generate a first mesh model of the object based on the first geometric generation network.

During implementation, when the user uploads the visual data of the single object, the computing device generates a first mesh model of the object based on the first geometric generation network corresponding to the object.

When the user uploads the visual data of the scenario, for each object included in the scenario, the computing device generates a first mesh model of the object based on the first geometric generation network corresponding to the object.

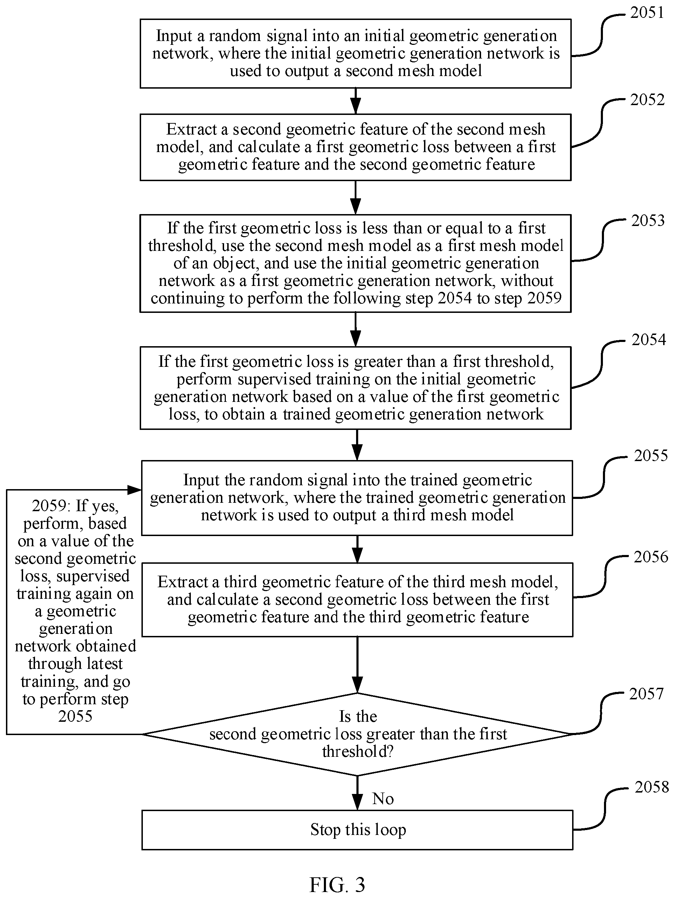

The following describes processing of training the initial geometric generation network and generating the first mesh model. Refer to FIG. 3. The processing may include the following steps.

Step 2051: Input a random signal into the initial geometric generation network, where the initial geometric generation network is used to output a second mesh model.

Step 2052: Extract a second geometric feature of the second mesh model, and calculate a first geometric loss between the first geometric feature and the second geometric feature.

Step 2053: If the first geometric loss is less than or equal to a first threshold, use the second mesh model as the first mesh model of the object, and use the initial geometric generation network as the first geometric generation network, without continuing to perform the following step 2054 to step 2059. The first threshold may be configured based on a precision requirement of the user for a mesh model, for example, may be set to a value between 0 and 0.1, for example, 0.01.

Step 2054: If the first geometric loss is greater than a first threshold, perform supervised training on the initial geometric generation network based on a value of the first geometric loss, to obtain a trained geometric generation network.

Step 2055: Input the random signal into the trained geometric generation network, where the trained geometric generation network is used to output a third mesh model.

Step 2056: Extract a third geometric feature of the third mesh model, and calculate a second geometric loss between the first geometric feature and the third geometric feature.

Step 2057: Determine whether the second geometric loss is greater than the first threshold.

Step 2058: If the second geometric loss is less than or equal to the first threshold, use the third mesh model as the first mesh model of the object, use a geometric generation network obtained through latest training as the first geometric generation network, and stop this loop.

Step 2059: If the second geometric loss is greater than the first threshold, perform, based on a value of the second geometric loss, supervised training again on a geometric generation network obtained through latest training, to obtain a trained geometric generation network, and go to perform step 2055.

In the foregoing steps, the mesh model of the object can be generated deterministically, and the generated mesh model is more accurate.

In a possible implementation, the geometric latent space network in the prior knowledge base may be optimized, and optimization processing may be as follows.

When the first mesh model of the object is generated by using the first geometric generation network obtained through training, a second geometric generation network parameter of the first geometric generation network may be obtained. The first geometric feature is used as an input sample, and the second geometric generation network parameter is used as an output sample. Supervised training is performed on the first geometric latent space network, to obtain a trained geometric latent space network. Further, the first geometric latent space network stored in the prior knowledge base may be updated to the trained geometric latent space network.

In a possible implementation, the first geometric generation network of the object may be stored in the digital asset library. During storage, the object instance label, the object category label, and the first geometric generation network of the object may be correspondingly stored.

In a possible implementation, the first geometric feature of the object may be stored in the prior knowledge base. During storage, the first geometric feature of the object, and the object category label and the object instance label of the object may be correspondingly stored.

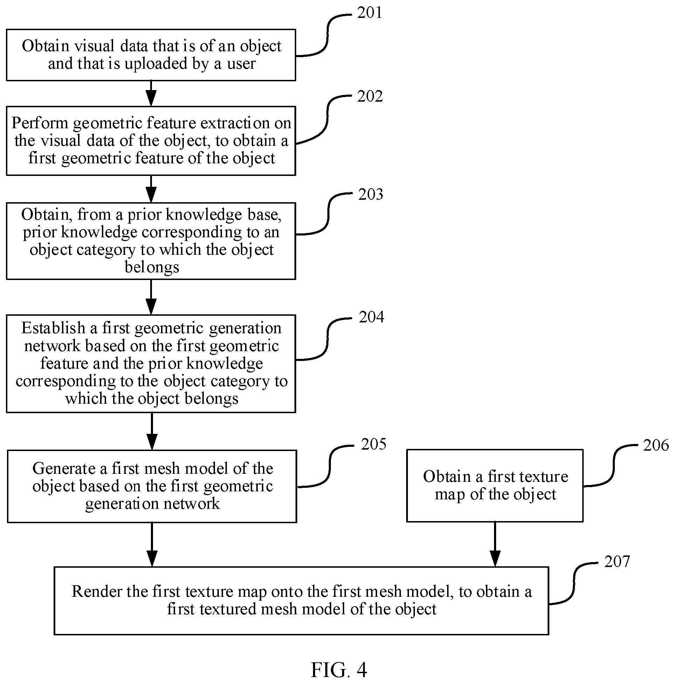

In a possible implementation, the first mesh model of the object generated in step 205 is a geometric white model without a texture. Based on this, refer to FIG. 4. The computing device may further perform the following steps.

Step 206: Obtain a first texture map of the object.

During implementation, there may be two cases in which the computing device obtains the first texture map of the object. The following separately describes the two cases.

Case 1: The visual data that is of the object and that is uploaded by the user is one or two of a non-colored point cloud and a non-colored voxel model.

In this case, the computing device cannot directly extract the first texture map of the object from the visual data of the object, and the user may specify a texture style, a color type, color brightness, and the like of a texture that the user wants to use. The user may select, on a texture selection interface of user equipment, the texture style, the color type, the color brightness, and the like of the texture to be used, and send a texture selection request to the computing device by using the user equipment. The texture selection request may carry texture style indication information, color type indication information, and color brightness indication information. Correspondingly, the computing device may obtain, from a texture map library, a texture map to which the texture type indication information, the color type indication information, and the color brightness indication information jointly correspond, and use the texture map as the first texture map of the object. Alternatively, the computing device may obtain, from a texture generation network library, a texture generation network to which the texture type indication information, the color type indication information, and the color brightness indication information jointly correspond, and input a random signal into the texture generation network. The texture generation network outputs the first texture map of the object.

Case 2: The visual data that is of the object and that is uploaded by the user is one or more of an image, a colored point cloud, and a colored voxel model.

In this case, when obtaining the prior knowledge corresponding to the object category to which the object belongs, in addition to obtaining the first geometric latent space network and the first geometric generation network hyperparameter, the computing device may further obtain a first texture latent space network and a first texture generation network hyperparameter. The first texture latent space network and the first texture generation network hyperparameter also belong to the prior knowledge corresponding to the object category to which the object belongs. Further, the first texture map of the object may be generated by using the following steps.

Step 2061: The computing device performs texture feature extraction on the visual data of the object, to obtain a first texture feature of the object.

A texture feature of the object may be represented in a form of a vector, and the texture feature is used to represent an RGB value of each pixel on the image of the object, a contrast of the image, grayscale distribution of the image, resolution of the image, pixel brightness, and the like.

During implementation, if the visual data of the object is the image, the colored point cloud, or the colored voxel model, the computing device may directly perform texture feature extraction on the visual data of the object, to obtain the first texture feature of the object.

Step 2062: The computing device establishes a first texture generation network based on the first texture feature, and the first texture latent space network and the first texture generation network hyperparameter that correspond to the object category to which the object belongs.

During implementation, the user inputs the first texture feature of the object into the first texture latent space network, and the first texture latent space network outputs a first texture generation network parameter. An initial texture generation network is established based on the first texture generation network parameter and the first texture generation network hyperparameter. A hyperparameter of the initial texture generation network is the first texture generation network hyperparameter, and a parameter of the initial texture generation network is the first texture generation network parameter. Then, the initial texture generation network is trained based on the first texture feature, to obtain the first texture generation network. In a training process, the hyperparameter of the initial texture network remains unchanged, and the parameter of the initial texture generation network changes.

Step 2063: Generate the first texture map of the object based on the first texture generation network.

The following describes processing of training the initial texture generation network and generating the first texture map. The processing may include the following steps.

S1: Input a random signal into the initial texture generation network, and the initial texture generation network outputs a second texture map.

S2: Extract a second texture feature of the second texture map, and calculate a first texture loss between the first texture feature and the second texture feature.

S3: If the first texture loss is less than or equal to a second threshold, use the second texture map as the first texture map of the object, and use the initial texture generation network as the first geometric generation network, without continuing to perform the following step S4 to step S8. The second threshold may be configured based on the precision requirement of the user for the mesh model, for example, may be set to a value between 0 and 0.1, for example, 0.01.

S4: If the first texture loss is greater than a second threshold, perform supervised training on the first texture generation network based on a value of the first texture loss, to obtain a trained texture generation network.

S5: Input the random signal into the trained texture generation network, and the trained texture generation network outputs a third texture map.

S6: Extract a third texture feature of the third texture map, and calculate a second texture loss between the first texture feature and the third texture feature.

S7: If the second texture loss is less than or equal to the second threshold, use the third texture map as the first texture map of the object, use a texture generation network obtained through latest training as the first texture generation network, and stop this loop.

S8: If the second texture loss is greater than the second threshold, perform, based on a value of the second texture loss, supervised training again on a texture generation network obtained through latest training, to obtain a trained texture generation network, and go to perform step S5.

Step 207: Render the first texture map onto the first mesh model, to obtain a first textured mesh model of the object.

During implementation, the computing device may render the first texture map onto the first mesh model by using a renderer, to obtain the first textured mesh model of the object.

In a possible implementation, a texture latent space network in the prior knowledge base may be optimized, and optimization processing may be as follows.

When a first texture model of the object is generated by using the trained texture generation network, a second texture generation network parameter of the trained texture generation network may be obtained. The first texture feature is used as an input sample, and the second texture generation network parameter is used as an output sample. Supervised training is performed on the first texture latent space network, to obtain a trained texture latent space network. Further, the first texture latent space network stored in the prior knowledge base may be updated to the trained texture latent space network.

In a possible implementation, the first texture generation network of the object may be stored in the digital asset library. During storage, the object instance label, the object category label, the first geometric generation network, and the first texture generation network of the object may be correspondingly stored.

In a possible implementation, the first texture feature of the object may be stored in the prior knowledge base. During storage, the first texture feature of the object, and the object category label, the object instance label, and the first geometric feature of the object may be correspondingly stored.

In a possible implementation, when the user uploads the visual data of the scenario, a mesh model of the scenario may be further generated on a basis of generating a mesh model of each object in the scenario. Correspondingly, processing may be as follows.

The computing device performs spatial feature extraction on each object in the visual data that is of the scenario and that is uploaded by the user, to obtain a spatial feature corresponding to each object. The spatial feature is used to represent a pose of the corresponding object in the scenario.

For every two objects in the scenario, it is obtained, through calculation based on spatial features respectively corresponding to the two objects, that a position relationship between the two objects is confidence of each of a plurality of preset position relationships. The preset position relationship includes intersection, attachment, "including", "being included", separation, and the like. Intersection indicates that an overlapping part exists between two objects, attachment indicates surface contact between two objects, "including" indicates that the other object is in the object, "being included" indicates that the object is in the other object, separation indicates that two objects are not in contact and are not in an "including" relationship or a "being included" relationship.

Then, a preset position relationship corresponding to highest confidence is determined as a first position relationship between the two objects.

Finally, cube space is constructed, and the mesh model of each object in the scenario is placed in the cube space based on the first position relationship between every two objects.

In addition, because the calculated position relationship between the objects may be inaccurate, position adjustment may be further performed on the mesh models of the objects based on the prior knowledge. Processing may be as follows.

For every two objects in the scenario, a first object category and a second object category to which the two objects respectively belong are determined, and it is obtained, from the prior knowledge base, that a position relationship between an object in the first object category and an object in the second object category in the scenario is reference confidence of each preset position relationship. For each preset position relationship, the confidence of the preset position relationship is multiplied by the reference confidence of the preset position relationship, to obtain comprehensive confidence of the preset position relationship, and a preset position relationship corresponding to highest comprehensive confidence is used as a second position relationship between the two objects. Position adjustment is performed, based on the second position relationship between every two objects in the scenario, on mesh models that are in a mesh model of a first scenario and that respectively correspond to the two objects. For example, if the scenario includes an object A and an object B, a first position relationship between the object A and the object B is intersection, and a second position relationship between the object A and the object B is attachment, positions of the object A and the object B are adjusted from intersection to attachment.

In addition, if a textured mesh model of the object is generated, a textured mesh model of the scenario may be generated. A specific generation method is the same as a method for generating the mesh model of the scenario, and details are not described herein again.

In a possible implementation, the user may specify a model type and a model format of a generated 3D model. Correspondingly, the computing device may convert the generated mesh model into the 3D model of the model type and the model format that are specified by the user. Specifically, processing may be as follows.

The user sends a 3D model conversion request to the computing device by using the user equipment. The 3D model conversion request carries indication information of a target model type, and may further carry indication information of a target model format and indication information of target resolution. After receiving the 3D model conversion request, the computing device converts the mesh model of the object into a 3D model of the target model type, the target model format, and the target resolution.

Conversion of the 3D model may be as follows.
1. The user needs a mesh model of an fbx format. The mesh model generated and stored by the computing device may be of an obj format. Based on this, the computing device may read the mesh model of the obj format, and store the mesh model as the fbx format, to obtain the mesh model of the fbx format.
2. The user needs a point cloud model of a pcd format and the target resolution. The computing device reads a mesh model of an obj format, collects points based on the target resolution, and stores the point cloud model as the pcd format, to obtain the point cloud model of the pcd format and the target resolution.
3. The user needs a voxel model of a binvox format and the target resolution. The computing device reads a mesh model of an obj format, sets a quantity of voxel cells based on the target resolution, performs octree space partitioning, and stores the voxel model as the binvox format, to obtain the voxel model of the binvox format and the target resolution.

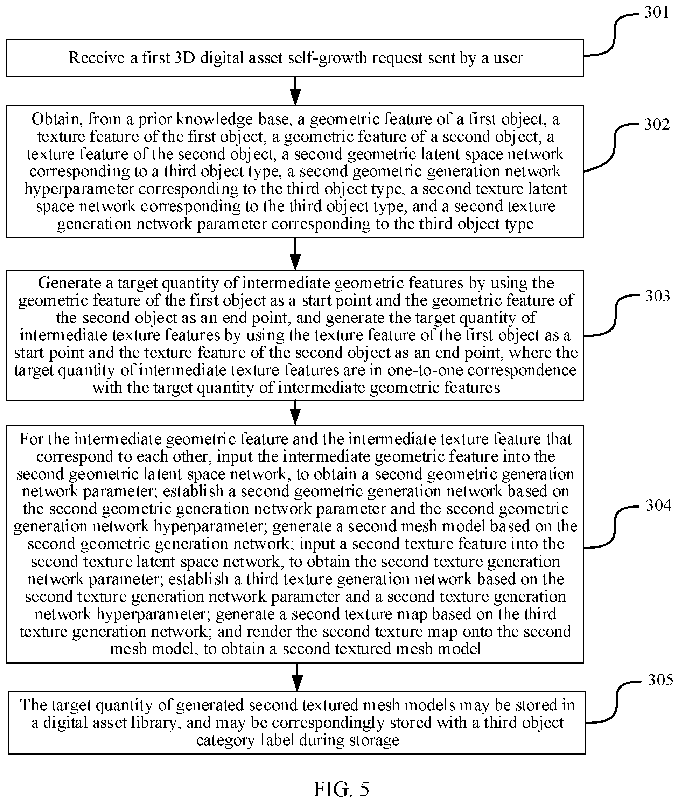

In a possible implementation, to obtain mesh models of more objects, so as to meet requirements such as large model training, an embodiment of this application further provides a 3D digital asset self-growth method. A computing device may automatically generate a 3D model by using the method. Correspondingly, as shown in FIG. 5, processing may include the following steps.

Step 301: Receive a first 3D digital asset self-growth request sent by a user.

During implementation, when there is no visual data of an object, or when textured mesh models of a large quantity of objects need to be quickly obtained, a user may specify, in user equipment, a first object in a third object category as a growth start point object, and a second object in the third object category as a growth end point object. In this way, the computing device may generate textured mesh models of some objects whose geometric features and texture features are between the first object and the second object. For example, if the third object category is a car, the first object is a sports car, and the second object is a sport utility vehicle (sport utility vehicle, SUV), the computing device may generate textured mesh models of some cars whose shapes are between the sports car and the SUV.

In addition to specifying the third object category, the growth start point object, and the growth start point object, the user may further specify a target quantity of generated textured mesh models in the user equipment. Correspondingly, the user equipment may send the first 3D digital asset self-growth request to the computing device. The first 3D digital asset self-growth request carries indication information of the first object, indication information of the second object, and the target quantity, and the first object and the second object are different objects in the third object category.

Step 302: Obtain, from a prior knowledge base, a geometric feature of the first object, a texture feature of the first object, a geometric feature of the second object, a texture feature of the second object, a second geometric latent space network corresponding to the third object type, a second geometric generation network hyperparameter corresponding to the third object type, a second texture latent space network corresponding to the third object type, and a second texture generation network parameter corresponding to the third object type.

Step 303: Generate a target quantity of intermediate geometric features by using the geometric feature of the first object as a start point and the geometric feature of the second object as an end point, and generate the target quantity of intermediate texture features by using the texture feature of the first object as a start point and the texture feature of the second object as an end point, where the target quantity of intermediate texture features are in one-to-one correspondence with the target quantity of intermediate geometric features.

The following describes how to generate the target quantity of intermediate geometric features by using the geometric feature of the first object as the start point and the geometric feature of the second object as the end point.

The geometric feature of the first object is a vector, and includes n elements. The geometric feature of the second object is also a vector, and also includes n elements. A 1^{st} element in the geometric feature of the first object is denoted as A1, and a 1^{st} element in the geometric feature of the second object is denoted as B1. A difference obtained by subtracting A1 from B1 is calculated, and is denoted as C1. C1 is divided by (x+1), to obtain a target step, and the target step is denoted as D, where x is the target quantity. A1+D is used as a 1^{st} element in a 1^{st} intermediate geometric feature, A1+2D is used as a 2^{nd} element in a 2^{nd} intermediate geometric feature, and so on. 1^{st} element in each of x intermediate geometric features may be obtained. A remaining element in each of the x intermediate geometric features may be obtained in a same manner. In this way, x intermediate geometric features may be obtained.

A method for generating the target quantity of intermediate texture features by using the texture feature of the first object as the start point and the texture feature of the second object as the end point is the same as the foregoing method for generating the intermediate geometric feature, and details are not described herein again.

In a possible implementation, the user may further specify the target step. Correspondingly, the first 3D digital asset self-growth request may further carry the target step. In this case, the computing device may calculate the intermediate geometric feature and the intermediate texture feature by using the target step carried in the first 3D digital asset self-growth request.

Step 304: For the intermediate geometric feature and the intermediate texture feature that correspond to each other, input the intermediate geometric feature into the second geometric latent space network, to obtain a second geometric generation network parameter; establish a second geometric generation network based on the second geometric generation network parameter and the second geometric generation network hyperparameter; generate a second mesh model based on the second geometric generation network; input a second texture feature into the second texture latent space network, to obtain the second texture generation network parameter; establish a third texture generation network based on the second texture generation network parameter and a second texture generation network hyperparameter; generate a second texture map based on the third texture generation network; and render the second texture map onto the second mesh model, to obtain a second textured mesh model.

Step 305: The target quantity of generated second textured mesh models may be stored in a digital asset library, and may be correspondingly stored with a third object category label during storage.

In a possible implementation, during 3D digital asset self-growth, a texture feature and a texture map may alternatively not be obtained, and finally, only a mesh model without a texture is generated.

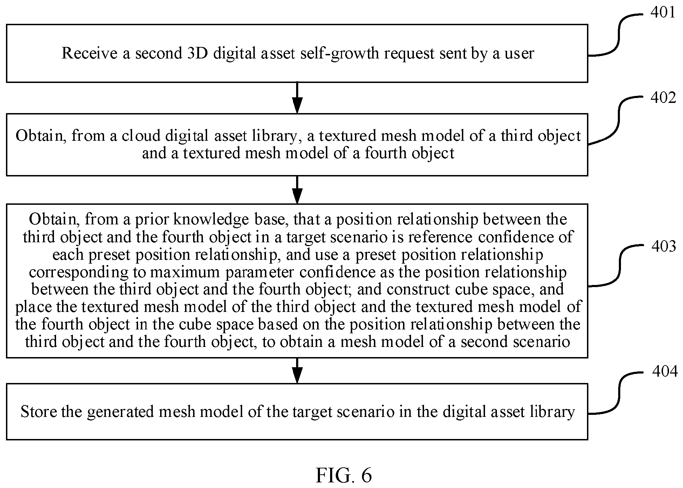

In a possible implementation, an embodiment of this application further provides a method for automatically generating a mesh model of a scenario. Correspondingly, as shown in FIG. 6, processing may include the following steps.

Step 401: Receive a second 3D digital asset self-growth request sent by a user.

During implementation, if the user wants to obtain a mesh model of a target scenario, the user may specify the target scenario and an object included in the target scenario by using user equipment. Correspondingly, the user equipment may send the second 3D digital asset self-growth request to a computing device. The second 3D digital asset self-growth request may carry indication information of the target scenario, indication information of a third object, and indication information of a fourth object.

Step 402: Obtain, from a digital asset library, a textured mesh model of the third object and a textured mesh model of the fourth object.

Step 403: Obtain, from a prior knowledge base, that a position relationship between the third object and the fourth object in the target scenario is reference confidence of each preset position relationship, and use a preset position relationship corresponding to maximum parameter confidence as the position relationship between the third object and the fourth object; and construct cube space, and place the textured mesh model of the third object and the textured mesh model of the fourth object in the cube space based on the position relationship between the third object and the fourth object, to obtain a mesh model of a second scenario.

Step 404: Store the generated mesh model of the target scenario in the digital asset library.

During implementation, the computing device may correspondingly store the generated mesh model of the target scenario and a scenario label of the target scenario in the digital asset library.

In addition, an example in which textured mesh models of two objects are used to generate a textured mesh model of a scenario is used for description herein. During implementation, textured mesh models of more objects may also be used to generate the textured mesh model of the scenario. When textured mesh models of three or more objects are used to generate the textured mesh model of the scenario, a position relationship between every two objects needs to be determined, and then, the textured mesh model of each object is placed, to generate the textured mesh model of the scenario.

In a possible implementation, during 3D digital asset self-growth, a mesh model without a texture of the object may be further obtained, to generate a mesh model without a texture of the scenario.

In a possible implementation, to save storage space, the textured mesh model may not need to be stored in the digital asset library, but a geometric generation network used to generate the mesh model and a texture generation network used to generate a texture map are stored. In this way, when a textured mesh model of a specific object needs to be obtained, a geometric generation network and a texture generation network of the object may be first obtained, a mesh model of the object is generated by using the obtained geometric generation network, a texture map of the object is generated by using the texture generation network, and then the texture map of the object is rendered onto the mesh model of the object, to obtain the textured mesh model of the object.

In a possible implementation, an embodiment of this application further provides a prior knowledge base establishment method. Correspondingly, processing may be as follows.

Initially, a prior knowledge base does not have any prior information. A public mesh model may be searched from an open source dataset or a network. Currently, there are many models obtained through manual modeling on the network, which can cover most object categories in reality. Structures of geometric generation networks corresponding to objects in different object categories are different, that is, geometric generation network hyperparameters are different. For example, in comparison with an apple, a car is a more complex object, and a corresponding geometric generation network should have more network layers. For an unknown object that has never been seen, a plurality of possible hyperparameter combination manners need to be tried. A large model may be used to determine a complexity degree of an object, provide several groups of possible geometric generation network hyperparameters, generate a plurality of neural networks of different structures, and select a group of geometric generation network hyperparameters with the highest generation efficiency and best generation result quality. A network structure defined by an obtained optimal geometric generation network hyperparameter is trained, to obtain a mesh model close to an input object and a finally fine-tuned geometric generation network. An extracted geometric feature of the mesh model is used as an input, and a parameter of the fine-tuned geometric generation network is used as an output, to train a geometric latent space network corresponding to an object category. Establishment of related prior knowledge of a texture is similar, and details are not described herein again.

In a possible implementation, all the steps shown in FIG. 2 may be implemented by a cloud computing device, or may be implemented by a local computing device of a user.

In a possible implementation, to enhance privacy protection of the user, visual data collected by the user may not need to be uploaded to a cloud. In this case, all the steps shown in FIG. 2 may be performed by the local computing device of the user, and a prior knowledge base may be deployed on the cloud. When processing of obtaining various types of prior knowledge from the prior library is related, the local computing device of the user may interact with the cloud to obtain corresponding prior knowledge.

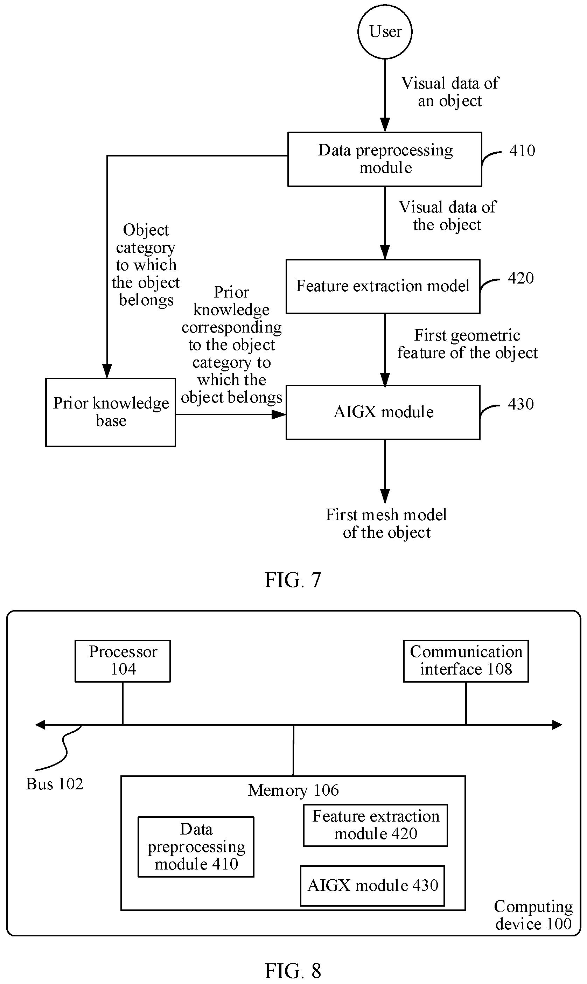

An embodiment of this application further provides a mesh model generation apparatus. The apparatus is used in a computing device. Refer to FIG. 7. The apparatus includes a data preprocessing module 410, a feature extraction module 420, and an AIGX module 430.

The data preprocessing module 410 is configured to obtain visual data that is of an object and that is uploaded by a user, where the visual data includes at least one of an image, a point cloud, and a voxel model.

The feature extraction module 420 is configured to perform geometric feature extraction on the visual data of the object, to obtain a first geometric feature of the object.

The AIGX module 430 is configured to: obtain, from a prior knowledge base, prior knowledge corresponding to an object category to which the object belongs, where the prior knowledge is used to guide establishment of a geometric generation network; establish a first geometric generation network based on the first geometric feature and the prior knowledge corresponding to the object category to which the object belongs; and generate a first mesh model of the object based on the first geometric generation network.

In a possible implementation, the prior knowledge corresponding to the object category to which the object belongs includes a first geometric latent space network and a first geometric generation network hyperparameter, and the AIGX module 430 is configured to:
input the first geometric feature into the first geometric latent space network, to obtain a first geometric generation network parameter;
establish an initial geometric generation network based on the first geometric generation network parameter and the first geometric generation network hyperparameter; and
train the initial geometric generation network based on the first geometric feature, to obtain the first geometric generation network.

In a possible implementation, the AIGX module 430 is configured to:
train the first geometric latent space network based on the first geometric feature and the geometric generation network parameter of the first geometric generation network, to obtain a trained geometric latent space network; and
replace the first geometric latent space network stored in the prior knowledge base with the trained geometric latent space network.

In a possible implementation, the data preprocessing module 410 is configured to:
obtain visual data that is of a first scenario and that is uploaded by the user, where the first scenario includes a plurality of objects; and
perform object segmentation on the visual data of the first scenario, to obtain visual data of each of the plurality of objects.

In a possible implementation, the apparatus further includes a positioning module, configured to:
perform spatial feature extraction on the plurality of objects in the visual data of the first scenario, to obtain spatial features respectively corresponding to the plurality of objects, where the spatial features are used to represent poses of the corresponding objects in the first scenario; and
place, based on the spatial features respectively corresponding to the plurality of objects, mesh models respectively corresponding to the plurality of objects, to obtain a mesh model of the first scenario.

In a possible implementation, the apparatus further includes a scenario optimization module, configured to:
for every two of the plurality of objects, obtain, through calculation based on spatial features respectively corresponding to the two objects, that a position relationship between the two objects is confidence of each of a plurality of preset position relationships;
determine a first object category and a second object category to which the two objects respectively belong;
obtain, from the prior knowledge base, that a position relationship between an object in the first object category and an object in the second object category in the first scenario is reference confidence of each preset position relationship;
determine the position relationship between the two objects based on the confidence and the reference confidence; and
perform, based on the position relationship between the two objects, position adjustment on mesh models that are in the mesh model of the first scenario and that respectively correspond to the two objects.

In a possible implementation, the AIGX module 430 is further configured to:
obtain a first texture map of the object; and
render the first texture map onto the first mesh model, to obtain a first textured mesh model of the object.

In a possible implementation, the visual data is at least one of a non-colored point cloud and a non-colored voxel model, and the AIGX module is configured to:
receive a texture selection request sent by the user, where the texture selection request carries texture style indication information, color type indication information, and color brightness indication information;
obtain a first texture generation network to which the texture type indication information, the color type indication information, and the color brightness indication information jointly correspond; and
generate the first texture map of the object based on the first texture generation network.

In a possible implementation, the prior knowledge is further used to guide establishment of a texture generation network, and the feature extraction module 420 is further configured to:
perform texture feature extraction on the visual data of the object, to obtain a first texture feature of the object; and
establish a second texture generation network based on the first texture feature and the prior knowledge of the object.

The AIGX module 430 is configured to:
generate the first texture map of the object based on the second texture generation network.

In a possible implementation, the prior knowledge includes a first texture latent space network and a first texture generation network hyperparameter, and the AIGX module is configured to:
input the first texture feature into the first texture latent space network, to obtain a first texture generation network parameter;
establish an initial texture generation network based on the first texture generation network parameter and the first texture generation network hyperparameter;
train the initial texture generation network based on the first texture feature, to obtain the second texture generation network; and
generate the first texture map of the object based on the second texture generation network.

In a possible implementation, the AIGX module 430 is further configured to:
train the first texture latent space network based on the first texture feature and a texture generation network parameter of the trained texture generation network, to obtain a trained texture latent space network; and
replace the first texture latent space network stored in the prior knowledge base with the trained texture latent space network.

In a possible implementation, the data preprocessing module is further configured to:
determine, based on an object category label stored in the prior knowledge base, an object category label corresponding to the object.

In a possible implementation, the AIGX module 430 is further configured to:
store the first geometric feature of the object in the prior knowledge base;
receive a first 3D digital asset self-growth request sent by the user, where the first 3D digital asset self-growth request carries indication information of a first growth start point object, indication information of a first growth end point object, and a target quantity, and the first growth start point object and the first growth end point object are different objects in a third object category;
obtain, from the prior knowledge base, a geometric feature of the first growth start point object, a geometric feature of the first growth end point object, and prior knowledge corresponding to the third object type;
generate a target quantity of intermediate geometric features by using the geometric feature of the first growth start point object as a start point and the geometric feature of the first growth end point object as an end point; and
for each of the target quantity of intermediate geometric features, generate a second geometric generation network based on the intermediate geometric feature and the prior knowledge corresponding to the third object type, and generate a second mesh model based on the second geometric generation network.

In a possible implementation, the AIGX module 430 is further configured to:
store the first geometric feature of the object in the prior knowledge base;
receive a second 3D digital asset self-growth request sent by the user, where the second 3D digital asset self-growth request carries indication information of a second growth start point object, indication information of a second growth end point object, and a target step, and the second growth start point object and the second growth end point object are different objects in a fourth object category;
obtain, from the prior knowledge base, a geometric feature of the second growth start point object, a geometric feature of the second growth end point object, and prior knowledge corresponding to the fourth object type;
generate at least one intermediate geometric feature by using the geometric feature of the second growth start point object as a start point and the geometric feature of the second growth end point object as an end point; and
for each of the at least one intermediate geometric feature, generate a third geometric generation network based on the intermediate geometric feature and the prior knowledge corresponding to the fourth object type, and generate a third mesh model based on the third geometric generation network.

In a possible implementation, the AIGX module 430 is further configured to:
receive a third 3D digital asset self-growth request sent by the user, where the third 3D digital asset self-growth request carries indication information of a second scenario and indication information of a plurality of objects in the second scenario;
obtain, from a digital asset library, mesh models of the plurality of objects in the second scenario;
obtain, from the prior knowledge base, that a position relationship between every two objects in the second scenario is reference confidence of each of a plurality of preset position relationships;
determine the position relationship between every two objects in the second scenario on a basis that the position relationship between every two objects in the second scenario is the reference confidence of each of the plurality of preset position relationships; and
place the mesh models of the plurality of objects in the second scenario based on the position relationship between every two objects in the second scenario, to obtain a mesh model of the second scenario.

The data preprocessing module 410, the feature extraction module 420, and the AIGX module 430 may all be implemented by software, or may be implemented by hardware. For example, the following uses the data preprocessing module 410 as an example to describe an implementation of the data preprocessing module 410. Similarly, for implementations of the feature extraction module 420 and the AIGX module 430, refer to the implementation of the data preprocessing module 410.

The module is used as an example of a software functional unit, and the data preprocessing module 410 may include code run on a computing instance. The computing instance may include at least one of a physical host (a computing device), a virtual machine, and a container. Further, there may be one or more computing instances. For example, a task mining training module 501 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the data preprocessing module 410 may include at least one computing device, for example, a server. Alternatively, the data preprocessing module 410 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field programmable gate array, FPGA), generic array logic (generic array logic, GAL), or any combination thereof.

A plurality of computing devices included in the data preprocessing module 410 may be distributed in a same region, or may be distributed in different regions. The plurality of computing devices included in a module A may be distributed in a same AZ, or may be distributed in different AZs. Similarly, the plurality of computing devices included in the data preprocessing module 410 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the data preprocessing module 410 may be configured to perform any step performed by the computing device in a mesh model generation method, the feature extraction module 420 may be configured to perform any step performed by the computing device in the mesh model generation method, and the AIGX module 430 may be configured to perform any step performed by the computing device in the mesh model generation method. Steps that the data preprocessing module 410, the feature extraction module 420, and the AIGX module 430 are responsible for implementing may be specified based on a requirement. The data preprocessing module 410, the feature extraction module 420, and the AIGX module 430 separately implement different steps in the 3D model generation method, to implement all functions of the mesh model generation apparatus.

An embodiment of this application further provides a computing device 100. The computing device 100 may be the computing device in the foregoing embodiment. The computing device may be a server, for example, a central server, an edge server, or a local server in a local data center. In some embodiments, the computing device may alternatively be a terminal device, for example, a desktop computer, a notebook computer, or a smartphone.

As shown in FIG. 8, the computing device 100 includes a bus 102, a processor 104, a memory 106, and a communication interface 108. The processor 104, the memory 106, and the communication interface 108 communicate with each other through the bus 102. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but it does not indicate that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable code, and the processor 104 executes the executable code to separately implement functions of the data preprocessing module 410, the feature extraction module 420, and the AIGX module 430, so as to implement processing performed by the computing device in a 3D model generation method. In other words, the memory 106 stores instructions for performing a mesh model generation method.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

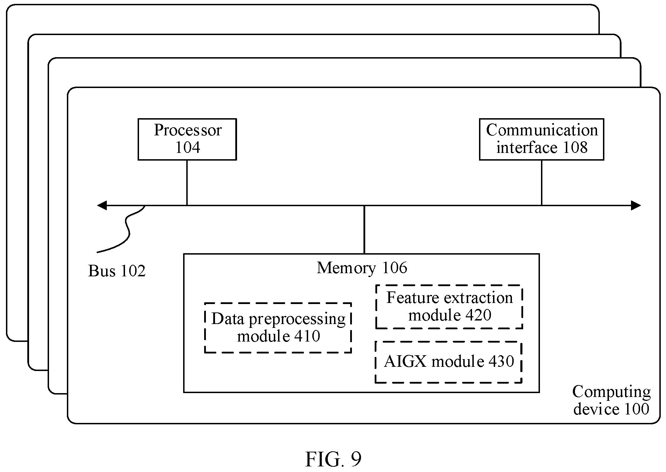

As shown in FIG. 9, the computing device cluster includes at least one computing device 100. A memory 106 in the one or more computing devices 100 in the computing device cluster may store same instructions for performing a mesh model generation method.

In some possible implementations, the memory 106 in each of the one or more computing devices 100 in the computing device cluster may store some instructions for performing the mesh model generation method. In other words, a combination of the one or more computing devices 100 may jointly execute the instructions for performing the mesh model generation method.

It should be noted that memories 106 in different computing devices 100 in the computing device cluster may store different instructions separately for performing some functions of the mesh model generation method.

In some possible implementations, the memory 106 in each of the one or more computing devices 100 in the computing device cluster may store some instructions for performing the mesh model generation method. In other words, a combination of the one or more computing devices 100 may jointly execute the instructions for performing a 3D model generation method.

It should be noted that the memories 106 in different computing devices 100 in the computing device cluster may store different instructions for performing some functions of 3D model generation. In other words, the instructions stored in the memories 106 in different computing devices 100 may implement functions of one or more nodes in a data preprocessing module 410, a feature extraction module 420, and an AIGX module 430.

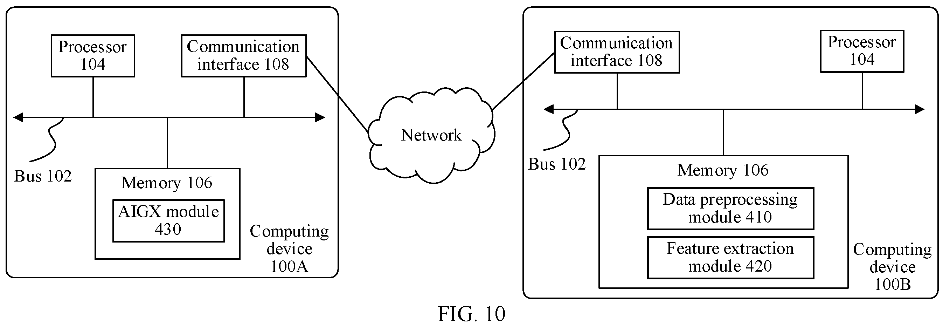

In some possible implementations, the one or more computing devices in the computing device cluster may be connected through a network. The network may be a wide area network, a local area network, or the like. FIG. 10 shows a possible implementation. As shown in FIG. 10, two computing devices 100A and 100B are connected through a network. Specifically, each computing device is connected to the network through a communication interface in the computing device. In this type of possible implementation, a memory 106 in the computing device 100A stores instructions for executing an AIGX module 430. In addition, a memory 106 in the computing device 100B stores instructions for performing functions of a data preprocessing module 410 and a feature extraction module 420. It should be understood that a function of the computing device 100A shown in FIG. 10 may alternatively be performed by a plurality of computing devices 100. Similarly, a function of the computing device 100B may alternatively be performed by a plurality of computing devices 100.

An embodiment of this application further provides another computing device cluster. For a connection relationship between computing devices in the computing device cluster, refer to a connection manner in the computing device cluster in FIG. 9 and FIG. 10 similarly. A difference lies in that a memory 106 in one or more computing devices 100 in the computing device cluster may store same instructions for performing a mesh model generation method.

In some possible implementations, the memory 106 in each of the one or more computing devices 100 in the computing device cluster may store some instructions for performing the mesh model generation method. In other words, a combination of the one or more computing devices 100 may jointly execute the instructions for performing the mesh model generation method.

It should be noted that memories 106 in different computing devices 100 in the computing device cluster may store different instructions for performing some functions of the mesh model generation method. In other words, the instructions stored in the memories 106 in different computing devices 100 may implement functions of one or more nodes in a data preprocessing module 410, a feature extraction module 420, and an AIGX module 430.

An embodiment of this application further provides a computer program product including instructions. The computer program product may be software or a program product that includes the instructions and that can run on a computing device or can be stored in any usable medium. When the computer program product runs on the computing device, at least one computing device is caused to perform the mesh model generation method provided in embodiments of this application.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the mesh model generation method provided in embodiments of this application.

In this application, terms such as "first" and "second" are used to distinguish between same items or similar items that have basically same effects and functions. It should be understood that there is no logical or time sequence dependency between "first" and "second", and a quantity and an execution order are not limited. It should be further understood that although the following descriptions use terms such as "first" and "second" to describe various elements, these elements should not be limited by the terms. These terms are merely used to distinguish one element from another element. For example, without departing from the scope of various examples, a first geometric feature may be referred to as a second geometric feature, and similarly, the second geometric feature may be referred to as the first geometric feature. Both the first geometric feature and the second geometric feature may be collectively referred to as computing code, and in some cases may be separate and different geometric features.

The term "at least one" in this application means one or more, and the term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A mesh model generation method, wherein the method comprises:
obtaining visual data that is of an object and that is uploaded by a user, wherein the visual data comprises at least one of an image, a point cloud, and a voxel model;
performing geometric feature extraction on the visual data of the object, to obtain a first geometric feature of the object;
obtaining, from a prior knowledge base, prior knowledge corresponding to an object category to which the object belongs, wherein the prior knowledge is used to guide establishment of a geometric generation network;
establishing a first geometric generation network based on the first geometric feature and the prior knowledge corresponding to the object category to which the object belongs; and
generating a first mesh model of the object based on the first geometric generation network.

2. The method according to claim 1, wherein the prior knowledge corresponding to the object category to which the object belongs comprises a first geometric latent space network and a first geometric generation network hyperparameter, and the establishing the first geometric generation network based on the first geometric feature and the prior knowledge corresponding to the object category to which the object belongs comprises:
inputting the first geometric feature into the first geometric latent space network, to obtain a first geometric generation network parameter;
establishing an initial geometric generation network based on the first geometric generation network parameter and the first geometric generation network hyperparameter; and
training the initial geometric generation network based on the first geometric feature, to obtain the first geometric generation network.

3. The method according to claim 2, wherein the method further comprises:
training the first geometric latent space network based on the first geometric feature and the geometric generation network parameter of the first geometric generation network, to obtain a trained geometric latent space network; and
replacing the first geometric latent space network stored in the prior knowledge base with the trained geometric latent space network.

4. The method according to any one of claims 1 to 3, wherein the obtaining the visual data that is of the object and that is uploaded by the user comprises:
obtaining visual data that is of a first scenario and that is uploaded by the user, wherein the first scenario comprises a plurality of objects; and
performing object segmentation on the visual data of the first scenario, to obtain visual data of each of the plurality of objects.

5. The method according to claim 4, wherein the method further comprises:
performing spatial feature extraction on the plurality of objects in the visual data of the first scenario, to obtain spatial features respectively corresponding to the plurality of objects, wherein the spatial features are used to represent poses of the corresponding objects in the first scenario; and
placing, based on the spatial features respectively corresponding to the plurality of objects, mesh models respectively corresponding to the plurality of objects, to obtain a mesh model of the first scenario.

6. The method according to claim 5, wherein the method further comprises:
for every two of the plurality of objects, obtaining, through calculation based on spatial features respectively corresponding to the two objects, that a position relationship between the two objects is confidence of each of a plurality of preset position relationships;
determining a first object category and a second object category to which the two objects respectively belong;
obtaining, from the prior knowledge base, that a position relationship between an object in the first object category and an object in the second object category in the first scenario is reference confidence of each preset position relationship;
determining the position relationship between the two objects based on the confidence and the reference confidence; and
performing, based on the position relationship between the two objects, position adjustment on mesh models that are in the mesh model of the first scenario and that respectively correspond to the two objects.

7. The method according to any one of claims 1 to 6, wherein the method further comprises:
obtaining a first texture map of the object; and
rendering the first texture map onto the first mesh model, to obtain a first textured mesh model of the object.

8. The method according to claim 7, wherein the visual data is at least one of a non-colored point cloud and a non-colored voxel model, and the method further comprises:
receiving a texture selection request sent by the user, wherein the texture selection request carries texture style indication information, color type indication information, and color brightness indication information; and
the obtaining the first texture map of the object comprises:
obtaining a first texture generation network to which the texture type indication information, the color type indication information, and the color brightness indication information jointly correspond; and
generating the first texture map of the object based on the first texture generation network.

9. The method according to claim 7, wherein the prior knowledge is further used to guide establishment of a texture generation network, and the method further comprises:
performing texture feature extraction on the visual data of the object, to obtain a first texture feature of the object; and
establishing a second texture generation network based on the first texture feature and the prior knowledge of the object; and
the obtaining the first texture map of the object comprises:
generating the first texture map of the object based on the second texture generation network.

10. The method according to claim 9, wherein the prior knowledge comprises a first texture latent space network and a first texture generation network hyperparameter, and the establishing the second texture generation network based on the first texture feature and the prior knowledge of the object comprises:
inputting the first texture feature into the first texture latent space network, to obtain a first texture generation network parameter;
establishing an initial texture generation network based on the first texture generation network parameter and the first texture generation network hyperparameter;
training the initial texture generation network based on the first texture feature, to obtain the second texture generation network; and
generating the first texture map of the object based on the second texture generation network.

11. The method according to claim 10, wherein the method further comprises:
training the first texture latent space network based on the first texture feature and a texture generation network parameter of the trained texture generation network, to obtain a trained texture latent space network; and
replacing the first texture latent space network stored in the prior knowledge base with the trained texture latent space network.

12. The method according to any one of claims 1 to 11, wherein the method further comprises:
determining, based on an object category label stored in the prior knowledge base, an object category label corresponding to the object.

13. The method according to any one of claims 1 to 12, wherein the method further comprises:
storing the first geometric feature of the object in the prior knowledge base;
receiving a first 3D digital asset self-growth request sent by the user, wherein the first 3D digital asset self-growth request carries indication information of a first growth start point object, indication information of a first growth end point object, and a target quantity, and the first growth start point object and the first growth end point object are different objects in a third object category;
obtaining, from the prior knowledge base, a geometric feature of the first growth start point object, a geometric feature of the first growth end point object, and prior knowledge corresponding to the third object type;
generating a target quantity of intermediate geometric features by using the geometric feature of the first growth start point object as a start point and the geometric feature of the first growth end point object as an end point; and
for each of the target quantity of intermediate geometric features, generating a second geometric generation network based on the intermediate geometric feature and the prior knowledge corresponding to the third object type, and generating a second mesh model based on the second geometric generation network.

14. The method according to any one of claims 1 to 13, wherein the method further comprises:
storing the first geometric feature of the object in the prior knowledge base;
receiving a second 3D digital asset self-growth request sent by the user, wherein the second 3D digital asset self-growth request carries indication information of a second growth start point object, indication information of a second growth end point object, and a target step, and the second growth start point object and the second growth end point object are different objects in a fourth object category;
obtaining, from the prior knowledge base, a geometric feature of the second growth start point object, a geometric feature of the second growth end point object, and prior knowledge corresponding to the fourth object type;
generating at least one intermediate geometric feature based on the target step by using the geometric feature of the second growth start point object as a start point and the geometric feature of the second growth end point object as an end point; and
for each of the at least one intermediate geometric feature, generating a third geometric generation network based on the intermediate geometric feature and the prior knowledge corresponding to the fourth object type, and generating a third mesh model based on the third geometric generation network.

15. The method according to any one of claims 1 to 14, wherein the method further comprises:
receiving a third 3D digital asset self-growth request sent by the user, wherein the third 3D digital asset self-growth request carries indication information of a second scenario and indication information of a plurality of objects in the second scenario;
obtaining, from a digital asset library, mesh models of the plurality of objects in the second scenario;
obtaining, from the prior knowledge base, that a position relationship between every two objects in the second scenario is reference confidence of each of a plurality of preset position relationships;
determining the position relationship between every two objects in the second scenario on a basis that the position relationship between every two objects in the second scenario is the reference confidence of each of the plurality of preset position relationships; and
placing the mesh models of the plurality of objects in the second scenario based on the position relationship between every two objects in the second scenario, to obtain a mesh model of the second scenario.

16. A mesh model generation apparatus, wherein the apparatus comprises:
a data preprocessing module, configured to obtain visual data that is of an object and that is uploaded by a user, wherein the visual data comprises at least one of an image, a point cloud, and a voxel model;
a feature extraction module, configured to perform geometric feature extraction on the visual data of the object, to obtain a first geometric feature of the object; and
an artificial intelligence-based digital asset generation AIGX module, configured to: obtain, from a prior knowledge base, prior knowledge corresponding to an object category to which the object belongs, wherein the prior knowledge is used to guide establishment of a geometric generation network; establish a first geometric generation network based on the first geometric feature and the prior knowledge corresponding to the object category to which the object belongs; and generate a first mesh model of the object based on the first geometric generation network.

17. The apparatus according to claim 16, wherein the prior knowledge corresponding to the object category to which the object belongs comprises a first geometric latent space network and a first geometric generation network hyperparameter, and the AIGX module is configured to:
input the first geometric feature into the first geometric latent space network, to obtain a first geometric generation network parameter;
establish an initial geometric generation network based on the first geometric generation network parameter and the first geometric generation network hyperparameter; and
train the initial geometric generation network based on the first geometric feature, to obtain the first geometric generation network.

18. The apparatus according to either of claims 16 and 17, wherein the data preprocessing module is configured to:
obtain visual data that is of a first scenario and that is uploaded by the user, wherein the first scenario comprises a plurality of objects; and
perform object segmentation on the visual data of the first scenario, to obtain visual data of each of the plurality of objects.

19. The apparatus according to claim 18, wherein the apparatus further comprises a positioning module, configured to:
perform spatial feature extraction on the plurality of objects in the visual data of the first scenario, to obtain spatial features respectively corresponding to the plurality of objects, wherein the spatial features are used to represent poses of the corresponding objects in the first scenario; and
place, based on the spatial features respectively corresponding to the plurality of objects, mesh models respectively corresponding to the plurality of objects, to obtain a mesh model of the first scenario.

20. The apparatus according to claim 19, wherein the apparatus further comprises a scenario optimization module, configured to:
for every two of the plurality of objects, obtain, through calculation based on spatial features respectively corresponding to the two objects, that a position relationship between the two objects is confidence of each of a plurality of preset position relationships;
determine a first object category and a second object category to which the two objects respectively belong;
obtain, from the prior knowledge base, that a position relationship between an object in the first object category and an object in the second object category in the first scenario is reference confidence of each preset position relationship;
determine the position relationship between the two objects based on the confidence and the reference confidence; and
perform, based on the position relationship between the two objects, position adjustment on mesh models that are in the mesh model of the first scenario and that respectively correspond to the two objects.

21. The apparatus according to any one of claims 16 to 20, wherein the AIGX module is further configured to:
store the first geometric feature of the object in the prior knowledge base;
receive a first 3D digital asset self-growth request sent by the user, wherein the first 3D digital asset self-growth request carries indication information of a first growth start point object, indication information of a first growth end point object, and a target quantity, and the first growth start point object and the first growth end point object are different objects in a third object category;
obtain, from the prior knowledge base, a geometric feature of the first growth start point object, a geometric feature of the first growth end point object, and prior knowledge corresponding to the third object type;
generate a target quantity of intermediate geometric features by using the geometric feature of the first growth start point object as a start point and the geometric feature of the first growth end point object as an end point; and
for each of the target quantity of intermediate geometric features, generate a second geometric generation network based on the intermediate geometric feature and the prior knowledge corresponding to the third object type, and generate a second mesh model based on the second geometric generation network.

22. The apparatus according to any one of claims 16 to 20, wherein the AIGX module is further configured to:
store the first geometric feature of the object in the prior knowledge base;
receive a second 3D digital asset self-growth request sent by the user, wherein the second 3D digital asset self-growth request carries indication information of a second growth start point object, indication information of a second growth end point object, and a target step, and the second growth start point object and the second growth end point object are different objects in a fourth object category;
obtain, from the prior knowledge base, a geometric feature of the second growth start point object, a geometric feature of the second growth end point object, and prior knowledge corresponding to the fourth object type;
generate at least one intermediate geometric feature based on the target step by using the geometric feature of the second growth start point object as a start point and the geometric feature of the second growth end point object as an end point; and
for each of the at least one intermediate geometric feature, generate a third geometric generation network based on the intermediate geometric feature and the prior knowledge corresponding to the fourth object type, and generate a third mesh model based on the third geometric generation network.

23. The apparatus according to any one of claims 16 to 22, wherein the AIGX module is further configured to:
receive a third 3D digital asset self-growth request sent by the user, wherein the third 3D digital asset self-growth request carries indication information of a second scenario and indication information of a plurality of objects in the second scenario;
obtain, from a digital asset library, mesh models of the plurality of objects in the second scenario;
obtain, from the prior knowledge base, that a position relationship between every two objects in the second scenario is reference confidence of each of a plurality of preset position relationships;
determine the position relationship between every two objects in the second scenario on a basis that the position relationship between every two objects in the second scenario is the reference confidence of each of the plurality of preset position relationships; and
place the mesh models of the plurality of objects in the second scenario based on the position relationship between every two objects in the second scenario, to obtain a mesh model of the second scenario.

24. A computing device cluster, wherein the computing device cluster comprises at least one computing device, and each computing device comprises a processor and a memory; and
the processor of the at least one computing device is configured to execute instructions stored in the memory of the device, to cause the computing device cluster to perform the mesh model generation method according to any one of claims 1 to 15.

25. A computer program product comprising instructions, wherein when the instructions are run by a computing device cluster, the computing device cluster is caused to perform the mesh model generation method according to any one of claims 1 to 15.

26. A computer-readable storage medium, comprising computer program instructions, wherein when the computer program instructions are executed by a computing device cluster, the computing device cluster performs the mesh model generation method according to any one of claims 1 to 15.
